# EUROPEAN PATENT APPLICATION

(11) **EP 4 329 053 A1**
(43) Date of publication of application: **28.02.2024**
(21) Application number: 23179831.5
(22) Date of filing: 16.06.2023
(51) Int. Cl.: H01M 50/103, H01M 50/15, H01M 50/169, H01M 50/188

(54) **SEALED BATTERY AND METHOD FOR MANUFACTURING THE SAME**

(30) Priority: 11.07.2022 JP 2022111153
(71) Applicant: Prime Planet Energy & Solutions, Inc., Chuo-ku Tokyo 103-0022 (JP)
(72) Inventor: MAEDA, Hitoshi, Tokyo, 103-0022 (JP)
(74) Representative: Kuhnen & Wacker Patent- und Rechtsanwaltsbüro PartG mbB

(57) **Abstract**

A sealed battery (100) includes: a battery case (11) including an opening (12); a closing plate (15) closing the opening (12); a collector terminal (30) including an external connector (34) exposed at an outer surface (17) of the closing plate (15); a resin insulator (40) insulating the closing plate (15) from the external connector (34); a laser-welded region (14W) formed on a fitted portion (14) between the battery case (11) and the closing plate (15); and a shield (19). The shield (19) includes: a first shield portion (19a) extending vertically or substantially vertically from the outer surface (17) of the closing plate (15) and located between the fitted portion (14) and the insulator (40); and a second shield portion (19b) extending from the first shield portion (19a) to the insulator (40) and covering a portion of a surface of the insulator (40).

## Description

### BACKGROUND OF THE DISCLOSURE

### 1. Field

The present application relates to sealed batteries and methods for manufacturing the sealed batteries.

### 2. Background

A sealed battery known in the art includes: an electrode body including an electrode; a battery case including an opening and housing the electrode body; a closing plate including a terminal insertion hole and closing the opening; a collector terminal whose first end is connected to the electrode inside the battery case and whose second end is inserted through the terminal insertion hole and extending out of the closing plate; and a resin insulating member insulating the closing plate from the collector terminal. Prior art documents related to such a sealed battery include JP 2015-111573 A, JP 2021-086813 A, JP 2005-116208 A, JP 2016-087616 A, JP 2017-111896 A, JP 2019-084540 A, JP 2013-054964 A, and WO 2012/043578.

JP 2015-111573 A, for example, discloses a technique involving fitting a closing plate to an opening of a battery case, and performing laser welding on a fitted portion such that a molten region formed in the vicinity of an insulator reaches an outer surface of the battery case.

### SUMMARY

A recent high-energy-density battery has a short distance between a collector terminal (which is inserted through a terminal insertion hole of a closing plate) and a fitted portion, so that a laser-welded region is located close to an insulator. In performing laser welding in the course of manufacture of such a high-energy-density battery, a change in the position of a workpiece, for example, may cause the incident angle of laser light to deviate to some degree. As a result, reflected laser light may be applied to an insulator. During laser welding, high-temperature molten metal may become fine particles (which are known as "spatters"), and the spatters may scatter around from a welded region together with fumes. This may unfortunately result in searing of the insulator. Studies conducted by the inventor of the present application suggest that the seared insulator suffers degradation, which may lead to a reduction in the insulating capacity of the insulator and/or a reduction in the airtightness of a resulting battery. Consequently, what is now desired is to protect an insulator during laser welding.

Accordingly, embodiments of the present application provide sealed batteries each including an insulator whose degradation is prevented or reduced during laser welding, and methods for manufacturing the sealed batteries.

An embodiment of the present application provides a sealed battery including: an electrode body including an electrode; a battery case including an opening and housing the electrode body; a closing plate including a terminal insertion hole and closing the opening; a collector terminal including an electrode body connector connected to the electrode inside the battery case, a shaft inserted through the terminal insertion hole, and an external connector exposed at an outer surface of the closing plate; a resin insulator insulating the outer surface of the closing plate from the external connector; a laser-welded region formed on a fitted portion between the battery case and the closing plate; and a shield disposed at least in an area where the fitted portion and the insulator are located closest to each other, the shield being provided along a peripheral edge of the insulator. The shield includes: a first shield portion extending vertically or substantially vertically from the outer surface of the closing plate and located between the fitted portion and the insulator; and a second shield portion extending from the first shield portion to the insulator and covering a portion of a surface of the insulator.

If reflected laser light is applied toward the insulator during laser welding, this embodiment would enable the first shield portion to function as a wall that blocks the reflected laser light. Thus, if, for example, the fitted portion is located close to the insulator or the incident angle of the laser light is somewhat deviated during laser welding, this embodiment would make it difficult for the reflected laser light to be applied to the insulator. If spatters scatter over the insulator during laser welding, the second shield portion would prevent contact between the insulator and the scattered spatters because the second shield portion covers the insulator. Consequently, this embodiment is able to prevent searing of the insulator and eventually prevent a reduction in the insulating capacity of the insulator and a reduction in the airtightness of the battery.

The above and other elements, features, steps, characteristics, and advantages of the present application will become more apparent from the following detailed description of the preferred embodiments with reference to the attached drawings.

### BRIEF DESCRIPTION OF THE DRAWINGS

FIG. 1 is a schematic perspective view of a sealed battery according to an embodiment of the present application.
FIG. 2 is an exploded perspective view of the sealed battery illustrated in FIG. 1.
FIG. 3 is a cross-sectional view of the sealed battery taken along the line III-III in FIG. 1.
FIG. 4 is a plan view of the sealed battery illustrated in FIG. 1.
FIG. 5 is a cross-sectional view equivalent to FIG. 3, illustrating a bending step.
FIG. 6 is a vertical cross-sectional view of a portion of the sealed battery adjacent to a fitted portion during a laser welding step.

### DETAILED DESCRIPTION OF THE PREFERRED EMBODIMENTS

Preferred embodiments of techniques disclosed herein will be described below with reference to the drawings. Matters that are necessary for carrying out the present application but are not specifically mentioned herein (e.g., common battery structures and manufacturing processes that do not characterize the present application) may be understood by those skilled in the art as design matters based on techniques known in the related art. The techniques disclosed herein may be carried out on the basis of the description given herein and common technical knowledge in the related art. In what follows, components and elements having the same functions are identified by the same reference signs, and description thereof may be simplified or omitted when deemed redundant.

As used herein, the term "battery" refers to any of various electricity storage devices from which electric energy is derivable, and is a concept encompassing primary batteries and secondary batteries. As used herein, the term "secondary battery" refers to any of various electricity storage devices, each of which is repeatedly chargeable and dischargeable by movement of charge carriers between a positive electrode and a negative electrode through an electrolyte. The electrolyte may be any of a liquid electrolyte (i.e., an electrolytic solution), a gel electrolyte, and a solid electrolyte. The term "secondary battery" subsumes not only storage batteries (or chemical batteries), such as lithium ion secondary batteries and nickel-metal hydride batteries, but also capacitors (or physical batteries), such as electric double layer capacitors. The following description focuses on an embodiment intended for a lithium ion secondary battery.

### Sealed Battery 100

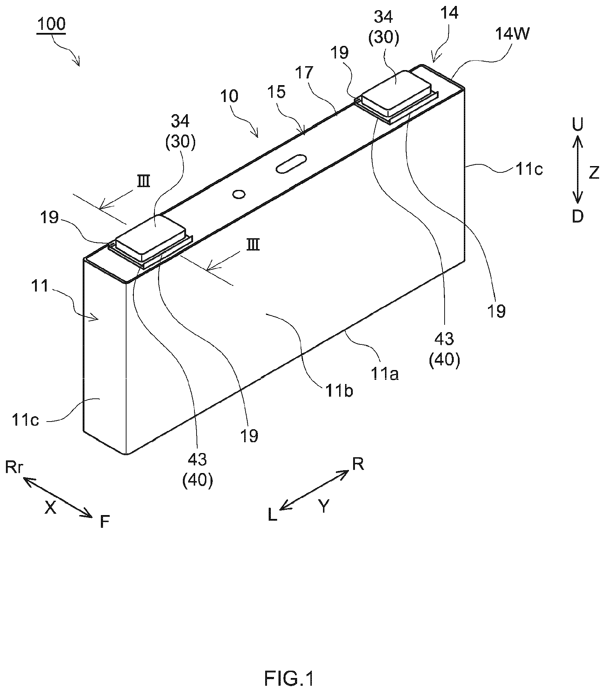

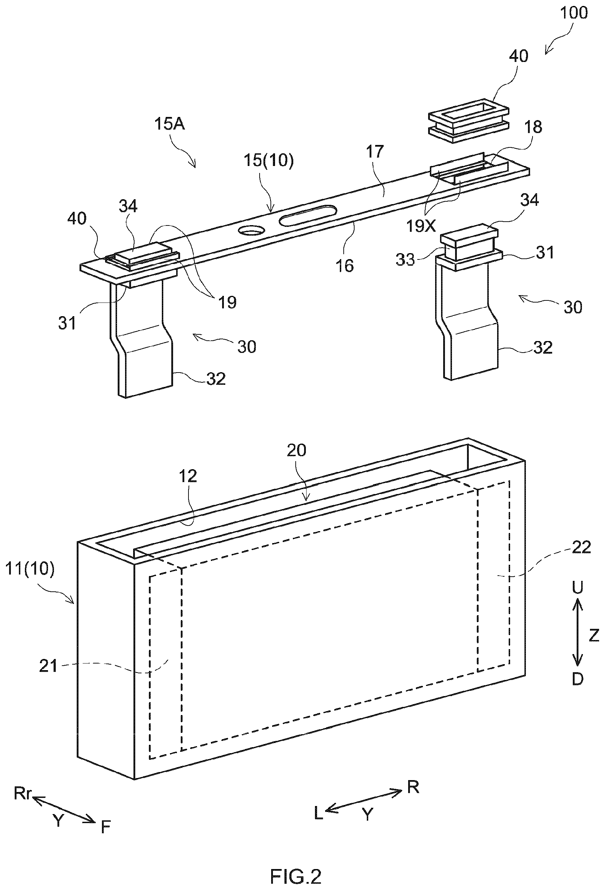

FIG. 1 is a perspective view of a sealed battery 100. FIG. 2 is an exploded perspective view of the sealed battery 100. In the following description, the reference signs L, R, F, Rr, U, and D in the drawings respectively represent left, right, front, rear, up, and down. A direction along the short sides of the sealed battery 100 in a plan view will hereinafter be referred to as a "short-side direction X". A direction along the long sides of the sealed battery 100 in the plan view will hereinafter be referred to as a "long-side direction Y". A direction along the height of the sealed battery 100 will hereinafter be referred to as an "up-down direction Z". These directions, however, are defined merely for the sake of convenience of description and do not limit in any way how the sealed battery 100 may be installed.

As illustrated in FIG. 2, the sealed battery 100 includes an exterior body 10, an electrode body 20, collector terminals 30, and insulators 40. Although not illustrated, the sealed battery 100 in the present embodiment further includes an electrolytic solution. In FIG. 2, an assembly component (hereinafter referred to as a "lid assembly 15A") provided by insert-molding the collector terminals 30 and the insulators 40 to a closing plate 15 of the exterior body 10 is illustrated as being separated from other components. In FIG. 2, the collector terminal 30 to be connected to an electrode on one side in the long-side direction Y (i.e., the right side in FIG. 2), the associated insulator 40, and the closing plate 15 are illustrated as being separated from each other.

The exterior body 10 includes a battery case 11 and the closing plate (or lid) 15. As illustrated in FIG. 1, the exterior body 10 in the present embodiment has a flat cuboidal outer shape (or rectangular outer shape). The exterior body 10 may be made of a material similar to any material known in the art or may be made of any other suitable material. The exterior body 10 (which includes the battery case 11 and the closing plate 15) is made of, for example, aluminum, an aluminum alloy, stainless steel, iron, or an iron alloy. In the present embodiment, the exterior body 10 is made of aluminum.

As illustrated in FIG. 2, the battery case 11 is a casing housing the electrode body 20 and storing the electrolytic solution. The battery case 11 is a rectangular container with a bottom. The battery case 11 is provided at its upper surface with an opening 12. The opening 12 has a substantially rectangular shape. As illustrated in FIG. 1, the battery case 11 includes: a bottom wall 11a including long sides and short sides; a pair of long side walls 11b extending upward from the long sides of the bottom wall 11a and facing each other; and a pair of short side walls 11c extending upward from the short sides of the bottom wall 11a and facing each other. The bottom wall 11a has a substantially rectangular shape. As used herein, the term "substantially rectangular shape" refers to not only a perfect rectangular shape (or a perfect oblong shape) but also various other rectangular shapes, such as a rectangular shape whose corners connecting long and short sides are rounded and a rectangular shape whose corners have cut-outs.

The battery case 11 may have any suitable thickness. From the viewpoint of durability, for example, the battery case 11 preferably has a thickness of about 0. 5 mm or more (e.g., 1 mm or more). From the viewpoint of cost and energy density, the battery case 11 preferably has a thickness of about 3 mm or less (e.g., 2 mm or less).

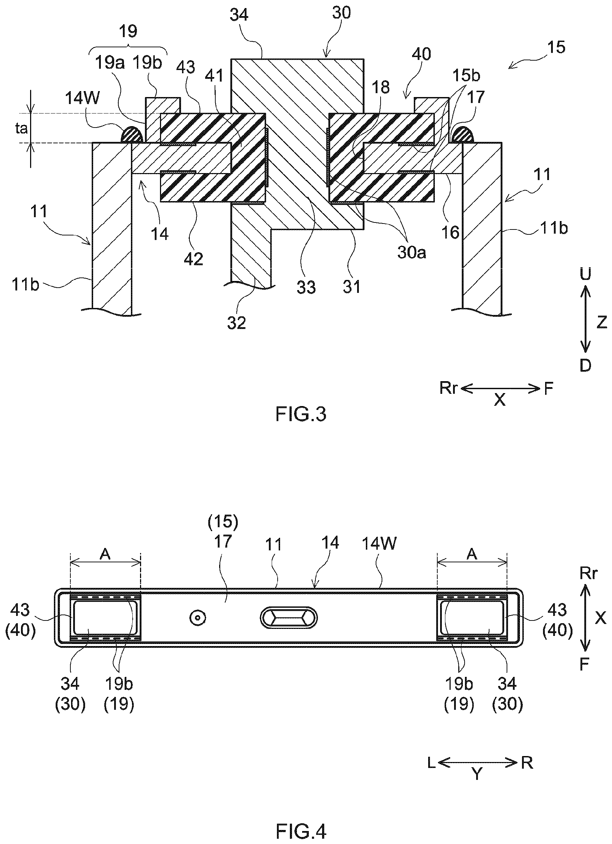

The closing plate 15 is a plate member fitted to the opening 12 of the battery case 11 so as to close the opening 12. The closing plate 15 has a substantially rectangular shape. The closing plate 15 is smaller in outer shape than the opening 12 of the battery case 11. The closing plate 15 faces the bottom wall 11a of the battery case 11. The closing plate 15 includes: an inner surface 16 facing toward the inside of the sealed battery 100; and an outer surface 17 facing toward the outside of the sealed battery 100. The closing plate 15 includes two terminal insertion holes 18 passing through the closing plate 15 in the up-down direction Z. The terminal insertion holes 18 are each defined in an associated one of the ends of the closing plate 15 in the long-side direction Y. The terminal insertion hole 18 on a first side in the long-side direction Y (i.e., the left side in FIG. 2) is provided for a positive electrode. The terminal insertion hole 18 on a second side in the long-side direction Y (i.e., the right side in FIG. 2) is provided for a negative electrode. The outer surface 17 of the closing plate 15 (i.e., the upper surface of the closing plate 15 in FIG. 3) is provided with shields 19 covering the insulators 40. The shields 19 will be described in detail below.

The closing plate 15 may have any suitable thickness. From the viewpoint of durability, for example, the closing plate 15 preferably has a thickness of about 0. 3 mm or more (e.g., 0.5 mm or more). From the viewpoint of cost and energy density, the closing plate 15 preferably has a thickness of about 2 mm or less (e.g., 1.5 mm or less). The closing plate 15 may be smaller in thickness than the battery case 11.

The surfaces of portions of the closing plate 15 in contact with the insulators 40 are at least partially subjected to a roughening process. The roughening process is a surface treatment involving making the surfaces uneven so as to increase surface areas and enhance anchor effect, thus promoting bonding or adhesion of the closing plate 15 to the insulators 40. The roughening process may be performed by, for example, application of laser light or sand blasting. The portions of the closing plate 15 subjected to the roughening process define roughened portions 15b (see FIG. 3). In the present embodiment, the roughened portions 15b are provided in: regions of the inner surface 16 located around the terminal insertion holes 18; and regions of the outer surface 17 located around the terminal insertion holes 18. Alternatively, the roughened portions 15b may be provided, for example, across the entire regions of the closing plate 15 in contact with the insulators 40. The roughened portions 15b may be optional.

The electrode body 20 is housed in the battery case 11. The electrode body 20 covered with, for example, a resin insulating film (not illustrated) is housed in the battery case 11. The electrode body 20 includes a positive electrode sheet 21, a negative electrode sheet 22, and separator sheets (not illustrated) disposed between the positive electrode sheet 21 and the negative electrode sheet 22. Each of the positive electrode sheet 21 and the negative electrode sheet 22 is an example of an electrode. In the present embodiment, the electrode body 20 is a wound electrode body provided by placing strip-shaped positive and negative electrode sheets 21 and 22 on top of another, with two strip-shaped separator sheets interposed therebetween, and winding the positive and negative electrode sheets 21 and 22 and the separator sheets around the longitudinal axis of the electrode body 20. Alternatively, the electrode body 20 may be a laminated electrode body including quadrangular positive and negative electrodes stacked on top of another such that the positive and negative electrodes are insulated from each other.

The positive electrode sheet 21 includes: a positive electrode collector (which is made of, for example, aluminum foil); and a positive electrode active material layer (which contains a positive electrode active material) fixed onto at least one of surfaces of the positive electrode collector. The positive electrode sheet 21 is not limited to any particular structure and may be similar to any positive electrode sheet used in any battery known in the art. The positive electrode active material may be any material known in the art. Examples of the positive electrode active material include a lithium transition metal composite oxide. The negative electrode sheet 22 includes: a negative electrode collector (which is made of, for example, copper foil); and a negative electrode active material layer (which contains a negative electrode active material) fixed onto at least one of surfaces of the negative electrode collector. The negative electrode sheet 22 is not limited to any particular structure and may be similar to any negative electrode sheet used in any battery known in the art. The negative electrode active material may be any material known in the art. Examples of the negative electrode active material include a carbon material, such as graphite. The separator sheets are insulating resin sheets with minute through holes that allow passage of charge carriers therethrough. The separator sheets are not limited to any particular structure and may each be similar to any separator sheet used in any battery known in the art.

The positive electrode sheet 21 is disposed in the battery case 11 such that one end of the positive electrode sheet 21 is located on the first side in the long-side direction Y (i.e., the left side in FIG. 2). The negative electrode sheet 22 is disposed in the battery case 11 such that one end of the negative electrode sheet 22 is located on the second side in the long-side direction Y (i.e., the right side in FIG. 2). Although the collector terminals 30 are illustrated as being separated from the positive electrode sheet 21 and the negative electrode sheet 22 in FIG. 2, the collector terminals 30 are each welded to an associated one of the positive electrode sheet 21 and the negative electrode sheet 22 when the sealed battery 100 is in finished form.

As illustrated in FIGS. 1 and 2, the collector terminals 30 are each disposed on an associated one of the ends of the closing plate 15 in the long-side direction Y. As illustrated in FIGS. 1 and 2, a first end of each collector terminal 30 is disposed inside the exterior body 10, and a second end of each collector terminal 30 is inserted through the associated terminal insertion hole 18 and disposed outside the closing plate 15. The collector terminal 30 for the positive electrode is made of, for example, aluminum or an aluminum alloy. The collector terminal 30 for the negative electrode is made of, for example, copper or a copper alloy.

FIG. 3 is a cross-sectional view of the sealed battery 100 taken along the line III-III in FIG. 1. As illustrated in FIGS. 2 and 3, the collector terminals 30 each include a base 31, an electrode body connector 32, a shaft 33, and an external connector 34. As illustrated in FIG. 2, each base 31 in the present embodiment has a quadrangular flat plate shape and extends in a horizontal direction. The size of each base 31 is such that each base 31 is insertable through the associated terminal insertion hole 18. Each electrode body connector 32 is disposed in the battery case 11. In the present embodiment, each electrode body connector 32 has a plate shape and extends downward from the rear end of the associated base 31. An end of each electrode body connector 32 is electrically connected to the positive electrode sheet 21 or the negative electrode sheet 22 of the electrode body 20 inside the battery case 11.

Each shaft 33 is disposed between the associated electrode body connector 32 and the associated external connector 34. Each shaft 33 is inserted through the associated terminal insertion hole 18. Each shaft 33 extends upward from the associated base 31. Each external connector 34 is disposed such that each external connector 34 is exposed at the outer surface 17 of the closing plate 15. Each external connector 34 is disposed over the associated shaft 33. The size of each external connector 34 is such that each external connector 34 is insertable through the associated terminal insertion hole 18. Each shaft 33 is smaller in outer size than the associated base 31 and the associated external connector 34, so that each shaft 33 is constricted relative to the associated base 31 and the associated external connector 34.

The surfaces of portions of each collector terminal 30 in contact with the associated insulator 40 are at least partially subjected to a roughening process similar to that performed on the closing plate 15. The portions of each collector terminal 30 subjected to the roughening process define roughened portions 30a (see FIG. 3). In the present embodiment, the roughened portions 30a are provided on the shafts 33 and the upper surfaces of the bases 31. Alternatively, the roughened portions 30a may be provided, for example, across the entire regions of the collector terminals 30 in contact with the insulators 40. The roughened portions 30a may be optional.

The insulators 40 each prevent conduction between the closing plate 15 and the associated collector terminal 30. The insulators 40 are made of resin. The insulators 40 are each made of, for example, fluorine resin, such as perfluoro alkoxy alkane (PFA) or polytetrafluoroethylene (PTFE), or a synthetic resin material, such as polyphenylene sulfide (PPS). An additive, such as an inorganic filler, may be added to the synthetic resin material. As illustrated in FIG. 3, the insulators 40 each include a tubular portion 41, a first flange 42, and a second flange 43. The tubular portion 41, the first flange 42, and the second flange 43 of each insulator 40 are integral with each other.

Each tubular portion 41 is located between the associated terminal insertion hole 18 and the shaft 33 of the associated collector terminal 30. Each tubular portion 41 insulates the associated terminal insertion hole 18 from the associated shaft 33. Each first flange 42 extends horizontally from the associated tubular portion 41 along the inner surface 16 of the closing plate 15. Each first flange 42 insulates the inner surface 16 of the closing plate 15 from the associated base 31. Each second flange 43 extends horizontally from the associated tubular portion 41 along the outer surface 17 of the closing plate 15. Each second flange 43 insulates the outer surface 17 of the closing plate 15 from the associated external connector 34. The first flange 42 and the second flange 43 of each insulator 40 are larger in outer shape than the base 31 and the external connector 34 of the associated collector terminal 30. As illustrated in FIGS. 1 and 3, each second flange 43 is projected outward of the associated collector terminal 30 in the plan view and exposed externally.

As illustrated in FIG. 2, the lid assembly 15A is an assembly component provided by insert-molding the collector terminals 30 and the insulators 40 to the closing plate 15 such that the closing plate 15, the collector terminals 30, and the insulators 40 are integral with each other. The closing plate 15 and the collector terminals 30 are firmly secured to the insulators 40 through the roughened portions 15b of the closing plate 15 and the roughened portions 30a of the collector terminals 30. The collector terminals 30 are thus secured to the closing plate 15 without swaging the bases 31 or bringing the collector terminals 30 into direct contact with the closing plate 15. The terminal insertion holes 18 are sealed with the insulators 40 by bringing the closing plate 15 and the collector terminals 30 into intimate contact with the insulators 40 through the roughened portions 15b and 30a. The collector terminals 30 and the insulators 40 are immovably secured to the closing plate 15.

According to studies conducted by the inventor of the present application, when insert molding is performed such that the closing plate 15, the collector terminals 30, and the insulators 40 are integral with each other, the area of contact between the closing plate 15 and the insulators 40 is preferably increased to enhance the adhesion therebetween. Thus, the external connectors 34 and/or the second flanges 43 tend to be larger than those known in the art, so that the insulators 40 (or specifically, the second flanges 43) and a fitted portion 14 tend to be close to each other on the outer surface 17 of the closing plate 15. Accordingly, the use of the techniques disclosed herein is particularly effective.

FIG. 4 is a plan view of the sealed battery 100 illustrated in FIG. 1. As illustrated in FIGS. 3 and 4, the fitted portion 14 is defined by a region where the closing plate 15 is fitted to the opening 12 of the battery case 11 (i.e., a juncture of the closing plate 15 and the battery case 11). As illustrated in FIG. 3, the fitted portion 14 is located adjacent to the outer surface 17 of the closing plate 15. Through the fitted portion 14, an inner peripheral edge (or inner side walls) of the battery case 11 is connected to an outer peripheral edge (or side walls) of the closing plate 15 such that the inner peripheral edge of the battery case 11 and the outer peripheral edge of the closing plate 15 are flush with each other. As illustrated in FIG. 4, the fitted portion 14 extends along the inner peripheral edge of the battery case 11 and the outer peripheral edge of the closing plate 15. In the plan view, the fitted portion 14 is formed continuously along the boundary between the battery case 11 and the closing plate 15 such that the fitted portion 14 has a substantially rectangular shape. The exterior body 10 is airtightly sealed (or hermetically closed) by performing laser welding on the fitted portion 14 along its entire length. Performing laser welding on the fitted portion 14 fuses together a constituent metal of the battery case 11 and a constituent metal of the closing plate 15 such that a laser-welded region 14W is formed.

In the present embodiment, the collector terminals 30 and the insulators 40 are each disposed on an associated one of the ends of the closing plate 15 in the long-side direction Y. The fitted portion 14 is thus located close to the insulators 40 on the ends of the closing plate 15 in the long-side direction Y. In the present embodiment, the fitted portion 14 is located closest to the insulators 40 in areas A on the ends of the closing plate 15 in the long-side direction Y. The areas A are substantially equal in length to the insulators 40 in the long-side direction Y. The areas A may be longer or shorter in length than the insulators 40 by about 1 mm. Each of the areas A is an example of an "area where the fitted portion and the insulator are located closest to each other". The distance between the fitted portion 14 and the insulator 40 (or specifically, the second flange 43) in each of the areas A may be any suitable distance. The distance between the fitted portion 14 and the insulator 40 (or specifically, the second flange 43) in each of the areas A may be about 5 mm or less, may typically be 3 mm or less, or may be in the range of, for example, about 1 mm to 2 mm.

In each of the areas A, each shield 19 is provided along a peripheral edge of the associated insulator 40. Specifically, each shield 19 is provided in an area where a long-side region of the fitted portion 14 and the associated insulator 40 face each other. The shields 19 are arranged in a pair on each of the ends of the closing plate 15 in the long-side direction Y such that the associated insulator 40 is sandwiched between the shields 19 in the short-side direction X. The two shields 19 provided on each of the ends of the closing plate 15 in the long-side direction Y extend in parallel or substantially in parallel with each other in the long-side direction Y. The shields 19 are substantially equal in length to the insulators 40 in the long-side direction Y. The shields 19 may be longer in length than the insulators 40 by about 1 mm. The shields 19 each have a linear shape (or are each I-shaped) in the plan view.

In the present embodiment, no shields 19 are provided between the fitted portion 14 and the insulators 40 on regions of the outer surface 17 of the closing plate 15 other than the areas A (e.g., a central region of the outer surface 17 of the closing plate 15 in the long-side direction Y and regions of the outer surface 17 of the closing plate 15 located on the right and left of the areas A in the long-side direction Y). Alternatively, each shield 19 may be provided continuously such that each shield 19 is substantially equal in length to the associated long-side region of the fitted portion 14. For example, when the collector terminals 30 and the insulators 40 are located closer to the extremities of the closing plate 15 in the long-side direction Y than they are in FIG. 4, the shields 19 may be provided not only in the areas A but also in areas where short-side regions of the fitted portion 14 and the insulators 40 face each other. In this case, the shields 19 are provided on each of the ends of the closing plate 15 in the long-side direction Y such that the shields 19 surround the associated insulator 40 from three directions.

As illustrated in FIG. 3, each shield 19 includes: a first shield portion 19a rising from the outer surface 17 of the closing plate 15; and a second shield portion 19b extending from the first shield portion 19a to the associated insulator 40 and covering a portion of a surface of the associated insulator 40. In the present embodiment, each shield 19 is a drawn portion. Each shield 19 is a portion of the closing plate 15. The shields 19 are integral with the closing plate 15. This makes it possible to provide the shields 19 without increasing the number of components. The shields 19 are typically made of metal, such as aluminum, an aluminum alloy, stainless steel, iron, or an iron alloy. In the present embodiment, the shields 19 are made of the same material as the closing plate 15. In the present embodiment, the shields 19 are made of aluminum. Alternatively, the shields 19 may be components separate from the closing plate 15. In this case, the shields 19 may be attached to the outer surface 17 of the closing plate 15 with fasteners, such as screws.

In the present embodiment, the shields 19 are flexible such that the shields 19 are bendable. Each shield 19 is typically smaller in thickness than the battery case 11 and/or the closing plate 15. In the present embodiment, each shield 19 is smaller in thickness than the second flange 43 of the associated insulator 40. Alternatively, each shield 19 may be greater in thickness than the second flange 43 of the associated insulator 40. Each shield 19 is typically greater in thickness than the positive electrode collector (which is made of metal foil, such as aluminum foil) and/or the negative electrode collector (which is made of metal foil, such as copper foil).

Each first shield portion 19a mainly serves to protect the associated insulator 40 from reflected laser light during laser welding. In the present embodiment, each first shield portion 19a extends in the up-down direction Z. Each first shield portion 19a extends vertically or substantially vertically from the outer surface 17 of the closing plate 15. Each first shield portion 19a typically has a height ta equal to or greater than the thickness of the associated insulator 40. The height ta of each first shield portion 19a corresponds to the length of each first shield portion 19a in the up-down direction Z. In the present embodiment, the height ta of each first shield portion 19a is substantially equal to the thickness of the associated insulator 40.

Each second shield portion 19b mainly serves to protect the associated insulator 40 from spatters that may scatter during laser welding. Each second shield portion 19b is a bent portion. In the present embodiment, each second shield portion 19b is bent at the upper end of the associated first shield portion 19a to the associated insulator 40. This makes it possible to provide the second shield portions 19b without increasing the number of components. Each second shield portion 19b, however, does not necessarily have to be a bent portion. Each second shield portion 19b may be connected to the upper end of the associated first shield portion 19a by, for example, welding.

In the present embodiment, each second shield portion 19b is bent at a substantially right angle at the upper end of the associated first shield portion 19a. The angle at which each second shield portion 19b is bent (i.e., the smaller one of the angles formed between each first shield portion 19a and the associated second shield portion 19b), however, does not necessarily have to be 90°. Each second shield portion 19b may be bent at an angle of, for example, between about 60° and about 120°. When viewed in cross section, each second shield portion 19b extends in parallel or substantially in parallel with the outer surface 17 of the closing plate 15 and the surface of the second flange 43. Alternatively, each second shield portion 19b may be bent at an angle of more than 90° and inclined toward the fitted portion 14. In the present embodiment, each second shield portion 19b is in contact with the associated second flange 43 and extends along the upper surface of the second flange 43. The length of each second shield portion 19b in the short-side direction X is such that each second shield portion 19b does not come into contact with the external connector 34 of the associated collector terminal 30.

### Method for Manufacturing Sealed Battery 100

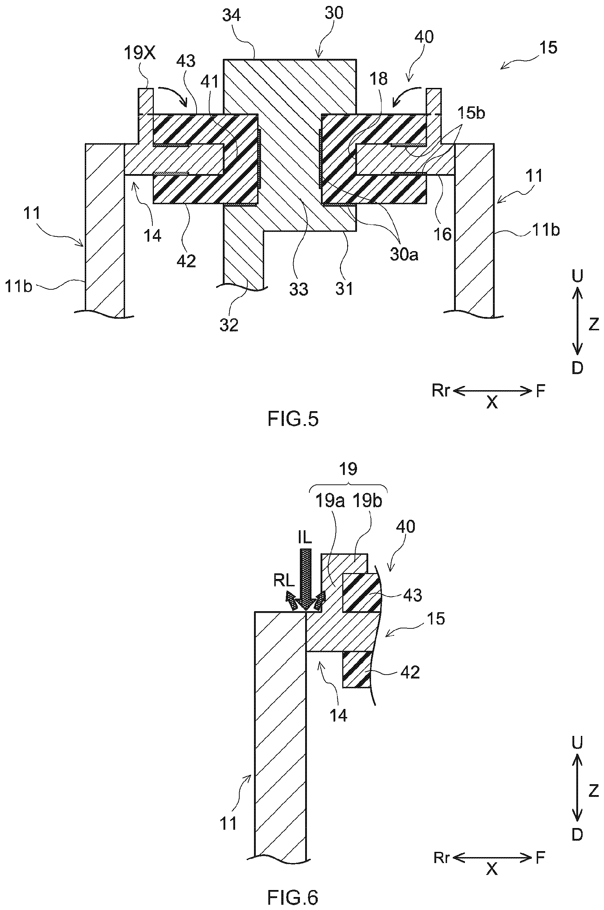

The sealed battery 100 described above may be manufactured by, for example, a manufacturing method including: a closing plate working step (1) involving forming drawn portions 19X (see FIG. 5) on the closing plate 15; a bending step (2) involving bending the drawn portions 19X; and a laser welding step (3) involving performing laser welding on the fitted portion 14. In the present embodiment, the manufacturing method further includes an insert molding step (1A) between the closing plate working step (1) and the bending step (2).

The closing plate working step (1) involves forming the drawn portions 19X (see FIG. 5) on the outer surface 17 of the closing plate 15. The drawn portions 19X are formed by, for example, press working, such as drawing (which includes deep drawing). Drawing in this case involves applying pressure to the inner surface 16 of the closing plate 15 so as to draw the closing plate 15. The drawn portions 19X formed by drawing are seamless. Thus, the drawn portions 19X are relatively easily formed into desired shape and thickness. Although the inner surface 16 of the closing plate 15 is illustrated as being flat in FIG. 5, portions of the inner surface 16 of the closing plate 15 to be located opposite to the drawn portions 19X in the up-down direction Z may be recessed.

The insert molding step (1A) involves fabricating an assembly component (e.g., the lid assembly 15A) by making the collector terminals 30 and the insulators 40 integral with the closing plate 15. The lid assembly 15A may be fabricated by insert-molding the closing plate 15, the collector terminals 30, and the insulators 40. This makes it possible to not only reduce the number of components but also form conductive paths more easily than a conventional method that involves using rivets. Insert molding may be performed in accordance with any method known in the art, examples of which are described in JP 2021-086813 A, JP 2021-086814 A, Japanese Patent No. 3986368, and Japanese Patent No. 6648671. The lid assembly 15A may be fabricated by, for example, a method that involves using a molding die including a lower mold and an upper mold and includes a component setting step, a positioning step, an upper mold setting step, an injection molding step, an upper mold releasing step, and a component removing step.

The component setting step involves inserting the collector terminals 30 through the terminal insertion holes 18 of the closing plate 15, and then placing the closing plate 15 in the lower mold. The positioning step involves positioning the collector terminals 30 such that the collector terminals 30 are fixed. The upper mold setting step involves placing the upper mold such that the closing plate 15 and the collector terminals 30 are sandwiched between the upper and lower molds in the up-down direction. The injection molding step first involves heating the molding die. The injection molding step then involves injecting molten resin into the molding die. The molten resin flows from the upper mold to the lower mold through the terminal insertion holes 18. The injection molding step subsequently involves cooling the molding die and a resulting molded article. The insulators 40, the closing plate 15, and the collector terminals 30 are thus integral with each other. The upper mold releasing step involves separating the upper mold from the lower mold. The component removing step involves removing the molded article from the lower mold.

The bending step (2) involves bending an end of each drawn portion 19X to the associated insulator 40. FIG. 5 is a cross-sectional view equivalent to FIG. 3, illustrating the bending step. As illustrated in FIG. 5, each drawn portion 19X in the present embodiment is bent such that each drawn portion 19X extends along the outer surface of the associated insulator 40. Specifically, each drawn portion 19X is bent at a location indicated by the broken line in FIG. 5. Performing this bending step provides the shields 19 each including: the first shield portion 19a extending vertically or substantially vertically between the fitted portion 14 and the associated insulator 40; and the second shield portion 19b bent at a substantially right angle at the upper end of the first shield portion 19a.

The laser welding step (3) involves housing the electrode body 20 in the battery case 11 and then fitting the closing plate 15 to the opening 12 of the battery case 11. The closing plate 15 is thus assembled to the battery case 11 such that the battery case 11 and the closing plate 15 are flush with each other. Then, laser welding is performed on the fitted portion 14 (which is the juncture of the battery case 11 and the closing plate 15), so that the battery case 11 and the closing plate 15 are laser-welded to each other. Laser light to be used for laser welding may be similar to any type of laser light known in the art or any other suitable type of laser light. Laser welding may be performed under conditions similar to those known in the art or any other suitable conditions. The direction of laser application and the outer surface 17 (or horizontal surface) of the closing plate 15 typically form an angle of about 90° ± 10° (e.g., about 90° ± 5°). Laser welding is performed on the fitted portion 14 along its entire length, so that the closing plate 15 is welded to the battery case 11 without any gap therebetween.

FIG. 6 is a vertical cross-sectional view of a portion of the sealed battery 100 adjacent to the fitted portion 14 during the laser welding step. In the present embodiment, laser light IL is applied to the fitted portion 14 as indicated by the thick arrow in FIG. 6. The laser light IL applied to the fitted portion 14 may be reflected off the fitted portion 14 as indicated by the thin arrows in FIG. 6 and may thus be applied toward the insulator 40. If reflected laser light RL is applied toward the insulator 40, however, the present embodiment would enable the first shield portion 19a of the shield 19 to function as a wall that blocks the reflected laser light RL. Thus, if, for example, the fitted portion 14 is located close to the insulators 40 as in the areas A or the incident angle of the laser light IL is somewhat deviated, the present embodiment would make it difficult for the reflected laser light RL to be applied to the insulators 40. Although not illustrated, if spatters scatter over the insulators 40, the second shield portions 19b would prevent contact between the scattered spatters and the insulators 40 because the second shield portions 19b cover the insulators 40. Because the above-described effects are achieved, the techniques disclosed herein are able to prevent searing of the insulators 40 and eventually prevent a reduction in the insulating capacity of the insulators 40 and a reduction in the airtightness of the sealed battery 100.

### Purpose of Use of Sealed Battery 100

The sealed battery 100 is usable for various purposes. The sealed battery 100 is suitably usable as a motor power source (e.g., a driving power source) to be installed on, for example, a vehicle (such as a passenger car or a truck). The sealed battery 100 may be installed on any type of vehicle, examples of which include, but are not limited to, a plug-in hybrid electric vehicle (PHEV), a hybrid electric vehicle (HEV), and a battery electric vehicle (BEV).

As described above, specific embodiments of the techniques disclosed herein include those described in clauses below.
Clause 1: A sealed battery including: an electrode body including an electrode; a battery case including an opening and housing the electrode body; a closing plate including a terminal insertion hole and closing the opening; a collector terminal including an electrode body connector connected to the electrode inside the battery case, a shaft inserted through the terminal insertion hole, and an external connector exposed at an outer surface of the closing plate; a resin insulator insulating the outer surface of the closing plate from the external connector; a laser-welded region formed on a fitted portion between the battery case and the closing plate; and a shield disposed at least in an area where the fitted portion and the insulator are located closest to each other, the shield being provided along a peripheral edge of the insulator, wherein the shield includes: a first shield portion extending vertically or substantially vertically from the outer surface of the closing plate and located between the fitted portion and the insulator; and a second shield portion extending from the first shield portion to the insulator and covering a portion of a surface of the insulator.
Clause 2: The sealed battery according to clause 1, wherein the closing plate, the collector terminal, and the insulator are insert-molded.
Clause 3: The sealed battery according to clause 1 or 2, wherein the shield is a drawn portion and is integral with the closing plate.
Clause 4: The sealed battery according to any one of clauses 1 to 3, wherein the second shield portion is a bent portion extending from the first shield portion and bent to the insulator.
Clause 5: The sealed battery according to any one of clauses 1 to 4, wherein the fitted portion has a substantially rectangular shape, and the shield is provided at least in an area where a long-side region of the fitted portion and the insulator face each other.
Clause 6: A method for manufacturing the sealed battery, the method including: a closing plate working step involving forming a drawn portion rising from the outer surface of the closing plate; a bending step involving bending a region of the drawn portion to the insulator; and a laser welding step involving housing the electrode body in the battery case after the bending step, and performing laser welding on the fitted portion.
Clause 7: The method according to clause 6, further including an insert molding step between the closing plate working step and the bending step, the insert molding step involving fabricating an assembly component by insert-molding the collector terminal and the insulator to the closing plate provided with the drawn portion.

Although the preferred embodiment of the present application has been described thus far, the foregoing embodiment is only illustrative, and the present application may be embodied in various other forms. The present application may be practiced based on the disclosure of this specification and technical common knowledge in the related field. The techniques described in the claims include various changes and modifications made to the embodiment illustrated above. Any or some of the technical features of the foregoing embodiment, for example, may be replaced with any or some of the technical features of variations of the foregoing embodiment. Any or some of the technical features of the variations may be added to the technical features of the foregoing embodiment. Unless described as being essential, the technical feature(s) may be optional.

### REFERENCE SIGNS LIST

- 10: exterior body
- 11: battery case
- 14: fitted portion
- 14W: laser-welded region
- 15: closing plate
- 15A: lid assembly
- 18: terminal insertion hole
- 19: shield
- 19a: first shield portion
- 19b: second shield portion
- 19X: drawn portion
- 20: electrode body
- 30: collector terminal
- 34: external connector
- 40: insulator
- 43: second flange
- 100: sealed battery

## Claims

1. A sealed battery (100) comprising:
an electrode body (20) including an electrode (21, 22);
a battery case (11) including an opening (12) and housing the electrode body (20);
a closing plate (15) including a terminal insertion hole (18) and closing the opening (12);
a collector terminal (30) including
an electrode body connector (32) connected to the electrode (21, 22) inside the battery case (11),
a shaft (33) inserted through the terminal insertion hole (18), and
an external connector (34) exposed at an outer surface (17) of the closing plate (15);
a resin insulator (40) insulating the outer surface (17) of the closing plate (15) from the external connector (34);
a laser-welded region (14W) formed on a fitted portion (14) between the battery case (11) and the closing plate (15); and
a shield (19) disposed at least in an area where the fitted portion (14) and the insulator (40) are located closest to each other, the shield (19) being provided along a peripheral edge of the insulator (40), wherein,
the shield (19) includes
a first shield portion (19a) extending vertically or substantially vertically from the outer surface (17) of the closing plate (15) and located between the fitted portion (14) and the insulator (40), and
a second shield portion (19b) extending from the first shield portion (19a) to the insulator (40) and covering a portion of a surface of the insulator (40).

2. The sealed battery (100) according to claim 1, wherein
the closing plate (15), the collector terminal (30), and the insulator (40) are insert-molded.

3. The sealed battery (100) according to claim 1 or 2, wherein
the shield (19) is a drawn portion and is integral with the closing plate (15).

4. The sealed battery (100) according to any one of claims 1 to 3, wherein
the second shield portion (19b) is a bent portion extending from the first shield portion (19a) and bent to the insulator (40).

5. The sealed battery (100) according to any one of claims 1 to 4, wherein
the fitted portion (14) has a substantially rectangular shape, and
the shield (19) is provided at least in an area where a long-side region of the fitted portion (14) and the insulator (40) face each other.

6. A method for manufacturing a sealed battery (100) including:
an electrode body (20) including an electrode (21, 22);
a battery case (11) including an opening (12) and housing the electrode body (20);
a closing plate (15) including a terminal insertion hole (18) and closing the opening (12);
a collector terminal (30) including
an electrode body connector (32) connected to the electrode (21, 22) inside the battery case (11),
a shaft (33) inserted through the terminal insertion hole (18), and
an external connector (34) exposed at an outer surface (17) of the closing plate (15);
a resin insulator (40) insulating the outer surface (17) of the closing plate (15) from the external connector (34);
a laser-welded region (14W) formed on a fitted portion (14) between the battery case (11) and the closing plate (15); and
a shield (19) disposed at least in an area where the fitted portion (14) and the insulator (40) are located closest to each other, the shield (19) being provided along a peripheral edge of the insulator (40), the shield (19) including
a first shield portion (19a) extending vertically or substantially vertically from the outer surface (17) of the closing plate (15) and located between the fitted portion (14) and the insulator (40), and
a second shield portion (19b) extending from the first shield portion (19a) to the insulator (40) and covering a portion of a surface of the insulator (40), wherein
the method comprises
a closing plate working step involving forming a drawn portion (19X) rising from the outer surface (17) of the closing plate (15),
a bending step involving bending a region of the drawn portion (19X) to the insulator (40), and
a laser welding step involving housing the electrode body (20) in the battery case (11) after the bending step, and performing laser welding on the fitted portion (14).

7. The method according to claim 6, further comprising an insert molding step between the closing plate working step and the bending step, the insert molding step involving fabricating an assembly component (15A) by insert-molding the collector terminal (30) and the insulator (40) to the closing plate (15) provided with the drawn portion (19X).
